# EUROPÄISCHE PATENTSCHRIFT

(11) **EP 2 814 193 B1**
(45) Veröffentlichungstag und Bekanntmachung des Hinweises auf die Patenterteilung: **16.11.2016**
(21) Anmeldenummer: 13172092.2
(22) Anmeldetag: 14.06.2013
(51) Int. Cl.: H04L 1/00

(54) **VERFAHREN UND SYSTEM ZUR ERKENNUNG VON FEHLERN BEI DER ÜBERTRAGUNG VON DATEN VON EINEM SENDER ZU ZUMINDEST EINEM EMPFÄNGER**
METHOD AND SYSTEM FOR DETECTING ERRORS IN THE TRANSMISSION OF DATA FROM A TRANSMITTER TO AT LEAST ONE RECEIVER
PROCÉDÉ ET SYSTÈME DE DÉTECTION D'ERREURS LORS DE LA TRANSMISSION DE DONNÉES D'UN ÉMETTEUR À AU MOINS UN RÉCEPTEUR

(43) Veröffentlichungstag der Anmeldung: 17.12.2014
(73) Patentinhaber: Siemens Aktiengesellschaft, 80333 München (DE)
(72) Erfinder: Barthel, Herbert, 91074 Herzogenaurach (DE); Walter, Maximilian, 90408 Nürnberg (DE); Schmauss, Wolfgang, 90607 Rückersdorf (DE); Sigwart, Edgar, 92224 Amberg (DE)

(56) Entgegenhaltungen:
- EP-A2- 0 942 569
- WO-A1-2011/067381
- US-A1- 2006 256 818

## Beschreibung

Die Erfindung betrifft ein Verfahren zur Erkennung von Fehlern bei der Übertragung von Daten von einem Sender zu zumindest einem Empfänger gemäß dem Oberbegriff des Patentanspruchs 1, und ein System zur Erkennung von Fehlern bei der Übertragung von Daten von einem Sender zu zumindest einem Empfänger gemäß dem Oberbegriff des Patentanspruchs 10.

Die Erfindung betrifft das technische Gebiet der fehlersicheren Kommunikation, die unter anderem die Kommunikation zwischen Feldgeräten, Steuerungskomponenten und ähnlichen Einrichtungen in der industriellen Prozessautomatisierung oder Fertigungsautomatisierung eingesetzt wird. Eine solche fehlersichere Kommunikation, auch F-Kommunikation genannt, wird insbesondere bei sicherheitsrelevanten Anwendungen eingesetzt, insbesondere dann, wenn Fehler in der Kommunikation zur Gefährdung von Menschen, Tieren oder Sachwerten führen können.

Zur fehlersicheren Kommunikation in den oben genannten technischen Gebieten wird im Stand der Technik eine besonders abgesicherte paketvermittelte Datenübertragung eingesetzt, insbesondere das PROFIsafe-Protokoll. Dabei werden in den "fehlersicheren" Datenpaketen (PDU = Prozess Data Unit), die dann auch "fehlersichere Prozess-Data-Unit" (F-PDU) genannt werden, zusätzliche Prüfwerte (Prüfsummen, Checksummen, Signaturen) eingesetzt, wobei in den Protokollen der unterlagerten Standard-Kommunikationslayer (Ethernet, Industrial Ethernet, PROFInet oder dgl.) bereits Prüfsummen (FCS - Frame Check Sequence) dgl. vorgesehen sind, die ein Erkennen von Übertragungsfehlern gestatten.

Ein Adress- oder Routingfehler in diesen "unteren" Protokollschichten, also außerhalb der erwähnten Sicherungsschicht der F-Kommunikation, führt zur Zustellung eines Datenpakets (F-PDU) an den falschen Empfänger. In diesem Fall passen die beim Sender zur Berechnung der Signatur (FCS) verwendeten Adressen nicht zu den Erwartungswerten des Empfängers. Sofern die Länge der Signatur (FCS) mindestens so lang ist, wie die Anzahl der für die Signaturbildung verwendeten Adressbits, wird ein sog. "Bündelfehler" zuverlässig erkannt, da eine Signaturbildung mit einem geeigneten Algorithmus alle Bündelfehler mit einer Länge, die kleiner ist als die Länge der Signatur (FCS), sicher erkennen kann.

In der F-Kommunikation werden sicherheitsgerichtete Datenpakete, sog. F-PDUs, im Nutzdatenbereich der Datenpakete (Frames) der unterlagerten Kommunikation transportiert; man spricht auch von "containering".

Dabei muss für jede sicherheitsrelevante Prozess-Data-Unit (F-PDU) nicht nur die Prozessdaten-Integrität (d.h. Unversehrtheit) nachgewiesen werden, sondern auch die Adress-Richtigkeit. Die Prüfung beider Eigenschaften erfolgt, wie erwähnt, in einer zusätzlichen Sicherungsschicht, die oberhalb des zugrundeliegenden Standard-Protokolls ausgeführt wird. Diese Sicherungsschicht baut also auf der beschriebenen geordneten, zuverlässigen Standard-Kommunikationsverbindung auf, deren korrekte Funktionsweise lediglich überwacht werden muss. Zu diesem Zweck werden im Stand der Technik alle sicherheitsrelevanten Prozess-Data-Units (F-PDU) mit einer zusätzlichen Signatur (F-CRC - Failsafe Cyclic Redundancy Check) versehen, die zum Beispiel mittels eines bekannten "Cyclic-Redundancy-Check"- Verfahrens (CRC) berechnet wird. Bei einer negativen Prüfung im Empfänger wird die F-PDU verworfen und das System abgeschaltet oder in einen anderen sicheren Zustand versetzt.

In der Signatur (F-CRC) werden auch die Quell- und/oder Zieladresse (F-Adressen) des F-Datenpakets (F-PDU) sowie eine aktuelle Sequenznummer (F-Sequenznummer) eingerechnet; die F-Adressen sind im allgemeinen nicht identisch mit den Adressen der Datenpakete der unterlagerten Standard-Kommunikationsadressen. Während die Letztgenannten beispielsweise die IP-Adressen der an der Kommunikation beteiligten Geräte sind oder diese zumindest beinhalten, betreffen die F-Adressen meist logische Prozesse oder logische Einheiten oder dgl. der sicherheitsgerichteten Anwendungen der Geräte.

Bei den für die F-Signatur (F-CRC) relevanten Daten, also die F-Adressen und die F-Sequenznummer, handelt es sich um sog. "a-priori-Informationen", also um Daten, die sowohl dem Sender als auch dem Empfänger zu jedem Zeitpunkt bekannt sind. Deshalb müssen diese Daten, also die in den Prüfwert (F-CRC) eingerechneten F-Adressen und F-Sequenznummern, nicht explizit versendet werden und sind deswegen nicht zwingend Bestandteil der Datenpakete (F-PDUs).

Es hat sich herausgestellt, dass zusätzliche Fehler ("Data Corruption"), die bei der Übertragung der Nachricht (F-PDU) oder der Signatur (F-CRC) im Falle einer impliziten Absicherung der Adresse auftreten, in bestimmten Fällen zu einer Nicht-Erkennbarkeit des Fehlers führen können. Dabei hängt die Restfehlerwahrscheinlichkeit, die angibt, mit welcher Wahrscheinlichkeit ein solcher Fehler in der Adresse nicht erkannt wird, vom sog. "Fehlermuster" ab, das durch den Adressfehler entsteht. Das Fehlermuster der Adressfehler wiederum hängt von der Vergabe der Adressen und anderen Konfigurationseinstellungen ab. Es ist daher nicht zufällig, sondern fallweise sogar über die gesamte Lebensdauer eines Systems konstant, nämlich insbesondere dann, wenn sich die Adressen während der Lebensdauer des Systems nicht ändern. Mit anderen Worten: Je nach verwendeter Adresse kann in ungünstigen Fällen die Wahrscheinlichkeit, dass ein Adressfehler erkannt wird, wesentlich schlechter sein, als statistisch für das Fehlererkennungsverfahren vorausgesagt ist. Zusammen mit der Tatsache, dass in industrieller Kommunikation die Adressen häufig konstant sind, können somit oft die geforderten Restfehlerwahrscheinlichkeiten nicht eingehalten werden.

Die Publikation WO2011/067381A1 - Radulescu "Reliable packet cut-through" zeigt ein Verfahren zur Fehlerprüfung von Datenpaketen während der Weiterleitung mittels eines Netzwerkknotens. dabei wird vorgeschlagen, mit der Weiterleitung der Datenpakete sogleich nach ihrem Empfang zu beginnen und die Prüfsummenauswertung parallel während der Weiterleitung durchzuführen. Sofern dabei festgestellt wird, dass ein übertragenes Datenpaket korrumpiert war, wird der Empfänger mittels einer gesonderten Nachricht darüber informiert, so dass dieses Datenpaket dort beispielsweise verworfen werden kann.

Die Druckschrift US2006/0256818A1 - Shvidian et al. "Method of transmitting and receiving data" zeigt die abgesicherte Übertragung von Datenpaketen eines Datenstromes, indem eine Vielzahl Datenpakete und ihre Header und die zugehörigen Prüfsummen zu einem Datenpaket zusammengefasst werden, welches eine gesamte Prüfsumme über alle inbegriffenen Datenpakete aufweist.

Es ist eine Aufgabe der vorliegenden Erfindung, insbesondere bei der Übertragung einer Vielzahl von Datenpaketen mit denselben F-Adressen, im statistischen Mittel die Restfehlerwahrscheinlichkeit zu verringern, insbesondere in den Fällen, in denen eine ungünstige Vergabe der im System verwendeten Adressen zu einer schlechteren Restfehlerwahrscheinlichkeit einzelner Datenpakete führt.

Dazu wird erfindungsgemäß ein Verfahren vorgeschlagen, mit welchem durch einen zu einem zufälligen Zeitpunkt auftretender Adressfehler auch ein zufälliges Fehlermuster resultiert, so dass im zeitlichen Mittel eine Mindest-Fehlererkennung erreicht wird. Dieser ist dann im Wesentlichen unabhängig von der Wahl der F-Adressen oder anderer Konfigurationseinstellungen.

Der erfindungsgemäßen Lösung der Aufgabe liegt also die neue Erkenntnis zugrunde, dass bei einem Zusammentreffen von Adress- und Datenintegritätsfehlern die Fehlererkennung wesentlich schlechter ist, als die für ein gewähltes SignaturVerfahren angenommene Fehlererkennung. Im Beispiel einer 24-Bit-Signatur kann die Fehlererkennung aufgrund der geschilderten ungünstigen Voraussetzungen bis zum Faktor 100000 (1E5) schlechter werden; für eine 32-Bit-Signatur kann diese Verschlechterung sogar 1E7 betragen.

Das zur Lösung der Aufgabe vorgeschlagene Verfahren und das vorgeschlagene System verwendet für die Adresssicherung auf Geräte-Ebene zunächst die Mechanismen einer bereits vorhandenen, unterlagerten Kommunikation, also die Adressfilterung und Adressprüfung eines Standard-Layers (z.B. Ethernet, CAN-Bus, etc.). Erfindungsgemäß werden entweder für jedes Datenpaket (F-PDU) mit sicherheitsgerichteten Adressen, also F-Adressen, für jeden Zeitabschnitt oder jeden Kommunikationszyklus (Sequenz oder Folge von Datenpakten) unterschiedliche Zahlenfolge-Werte, die auf den F-Adressen basieren, anstelle der bisher verwendeten F-Adressen für die Berechnung der Signatur verwendet. Dadurch wird erreicht, dass die Fehlermuster bezüglich der Adressinformation (F-Adresse) für jedes Datenpaket bzw. für jeden Kommunikationszyklus (Folge von Datenpaketen) unterschiedlich sind, und zwar auch dann, wenn die Adressinformationen, also die F-Adressen, gleich bleiben. Damit ergibt sich im statistischen Mittel eine bessere Fehlererkennung, auch bei ungünstiger Konfiguration der F-Adressen.

Die Aufgabe wird insbesondere durch ein Verfahren gemäß Patentanspruch 1 und durch ein System gemäß Patentanspruch 8 gelöst.

Dabei wird ein Verfahren zur Erkennung von Fehlern bei der Übertragung von Daten von einem Sender zu zumindest einem Empfänger vorgeschlagen, wobei die Daten zusammen mit den Empfänger identifizierende Adressinformationen in einer Folge von sicherheitsgerichteten Datenpaketen (F-PDU's - Failsafe Process Data Units) codiert sind und mittels der sicherheitsgerichteten Datenpakete übertragen werden, wobei für jedes sicherheitsgerichtete Datenpaket vom Sender zumindest ein Prüfwert generiert und mit dem oder in dem Datenpaket zu dem Empfänger übermittelt und von diesem mit einem Erwartungswert verglichen wird, wobei im Fall einer Abweichung ein Fehler erkannt wird. Dabei wird für jedes zu übertragende sicherheitsgerichtete Datenpaket in einem ersten Schritt durch den Sender aus den sicherheitsgerichteten Adressinformationen mittels einer ersten Rechenvorschrift ein Zahlenfolge-Wert errechnet und aus diesem Zahlenfolge-Wert mittels einer zweiten Rechenvorschrift der Prüfwert generiert, wobei die erste Rechenvorschrift derart ausgebildet ist, dass sich für jedes Datenpaket oder jede Folge von Datenpaketen ein veränderter Zahlenfolge-Wert (shuffle) ergibt, in einem zweiten Schritt wird das Datenpaket mit dem Prüfwert zu dem Empfänger übertragen, in einem dritten Schritt wird durch den Empfänger aus den sicherheitsgerichteten Adressinformationen des sicherheitsgerichteten Datenpaketes mittels der ersten Rechenvorschrift der Zahlenfolge-Wert errechnet und aus diesem mittels der zweiten Rechenvorschrift der Erwartungswert generiert und mit dem Prüfwert verglichen. Dabei wird - je nach erster Rechenvorschrift - nach der Verarbeitung eines Datenpaketes oder einer Sequenz von Datenpaketen ein veränderter Zahlenfolge-Wert und damit auch ein geänderter Prüfwert gebildet. Das vorgeschlagene Verfahren sorgt somit dafür, dass die Fehlermuster der einzelnen Adressbeziehungen in der Kommunikation über die Laufzeit der Kommunikationsbeziehung nicht konstant sind, sondern über die Zeit viele oder sogar alle möglichen Fehlermuster durchlaufen. Hierdurch wird erreicht, dass im zeitlichen Mittel die Fehlererkennung immer besser ist als die sicherheitstechnisch geforderte Fehlererkennung. Durch das Verfahren wird erreicht, dass die für die Berechnung (CRC-Bildung) des Prüfwerts verwendete Adressinformation in einen fortwährend variierenden Zahlenfolge-Wert umgesetzt wird, der für jedes Datenpaket oder jede Folge von Datenpaketen unterschiedlich ist. Auch bei konstanten Adressinformationen und bei konstanten Daten und anderer Parameter der Prüfwertbildung ist durch das Verfahren gewährleistet, dass der in die Berechnung des Prüfwerts eingehende Zahlenfolge-Wert beispielsweise bei einem Vertauschen von Adressen für jedes Datenpaket ein unterschiedliches Fehlermuster ergibt, d.h., dass beispielsweise eine bei einer CRC-Berechnung verwendete Bit-weise exklusiv-oder-Verknüpfung zwangsweise zu unterschiedlichen Ergebnissen führt. Dadurch wird das Fehlermuster der Adresswerte beliebiger Teilnehmer nahezu gleich verteilt, und zwar auch dann, wenn die Adressen im System ungünstig konfiguriert sind.

Die Aufgabe wird außerdem durch ein System zur Erkennung von Fehlern bei der Übertragung von Daten von einem Sender zu zumindest einem Empfänger gelöst, wobei die Daten in einer Folge von sicherheitsgerichteten Datenpaketen (F-PDU's - Failsafe Process Data Units) von dem Sender zu dem Empfänger übertragen werden, wobei die Datenpakete den Empfänger identifizierende sicherheitsgerichtete Adressinformationen ("F-Adressen") und einen vom Sender generierten und vom Empfänger auszuwertenden Prüfwert umfassen, wobei der Empfänger zum Vergleich des mit dem jeweiligen sicherheitsgerichteten Datenpaket empfangenen Prüfwertes mit einem selbst generierten Erwartungswert eingerichtet ist, wobei der Vergleich zwischen Prüfwert und Erwartungswert bei einer Abweichung zur Erkennung von Fehlern bei der Übertragung führt. Dabei ist für jedes zu übertragende Datenpaket der Sender zum Errechnen eines Zahlenfolge-Werts aus den Adressinformationen mittels einer ersten Rechenvorschrift und zur Bildung des Prüfwertes aus diesem Zahlenfolge-Wert mittels einer zweiten Rechenvorschrift in einem ersten Schritt eingerichtet, wobei die erste Rechenvorschrift derart ausgebildet ist, dass sich für jedes Datenpaket oder jede Folge von Datenpaketen ein veränderter Zahlenfolge-Wert (shuffle) ergibt; das System ist zur Übertragung des Datenpaketes mit dem Prüfwert zu dem Empfänger in einem zweiten Schritt ausgebildet; der Empfänger ist ebenfalls zur Errechnung eines eigenen Zahlenfolge-Wertes aus den Adressinformationen mittels der ersten Rechenvorschrift und zur Generierung des Erwartungswertes aus diesem eigenen Zahlenfolge-Wertes mittels der zweiten Rechenvorschrift und zum Vergleich des mit dem Datenpaket empfangenen Prüfwertes mit dem Erwartungswert in einem dritten Schritt eingerichtet. Dadurch ergibt sich in dem System nach der Verarbeitung eines Datenpaketes oder einer Sequenz von Datenpaketen ein veränderter Zahlenfolge-Wert und damit auch Prüfwert, auch bei gleichbleibenden Adressinformationen. Mit einem solchen System können die Vorteile realisiert werden, die bereits für das erfindungsgemäße Verfahren angegeben worden sind.

Vorteilhafte Ausgestaltungen des erfindungsgemäßen Verfahrens sind in den abhängigen Patentansprüchen 2 bis 9 angegeben. Die dabei beschriebenen Merkmale und Vorteile gelten sinngemäß auch für das erfindungsgemäße System.

Vorteilhaft wird sowohl im Sender als auch im Empfänger der Zahlenfolge-Wert mittels separat vorliegenden Adressinformationen separat neu gebildet, so dass die der Zahlenfolge-Wert-Bildung zugrunde liegenden Daten nicht mit einem Datenpaket übertragen werden müssen und somit auch auf dem Kommunikationsweg keinem Kommunikationsfehler ausgesetzt sein können.

Weiter wird vorteilhaft der Zahlenfolge-Wert jeweils aus vorhergehenden Zahlenfolge-Werte, insbesondere - beispielsweise durch Summierung - aus den zwei unmittelbar vorher verwendeten Zahlenfolge-Werten, mittels der ersten Rechenvorschrift neu gebildet, was die statistische Streuung etwaiger Fehlermuster begünstigt und somit im zeitlichen Mittel die Fehlererkennung weiter verbessert. Zur Bildung der ersten Zahlenfolge-Werte, insbesondere der ersten beiden Zahlenfolge-Werte, sind dann vorzugsweise eigene Start-Rechenvorschriften vorgesehen, wobei vorteilhaft bei der Generierung des ersten und/oder zweiten Zahlenfolge-Wertes nach einem "Reset" oder nach einer Initialisierung der Datenübertragung die Adressinformationen einfließen, so dass diese bei den nachfolgenden Zahlenfolge-Werten implizit bereits berücksichtigt sind und daher in der ersten Rechenvorschrift dann nicht mehr explizit einbezogen werden müssen, sondern automatisch in die Errechnung jedes nachfolgenden Zahlenfolge-Wertes eingeflossen sind.

Vorteilhaft wird für die Bildung des Zahlenfolge-Wertes eine Folgenummer (Sequenznummer o.ä.) des betreffenden Datenpakets bzw. eine Folgenummer einer betreffenden Sequenz (Folge) von Datenpaketen verwendet. Vorteilhaft wird auch die Folgenummer nicht zusammen mit dem zu überprüfenden Datenpaket übermittelt, so dass die Ermittlung bzw. Fortschreibung der Folgenummer seitens des Senders und des Empfängers ebenfalls unabhängig voneinander durchgeführt werden.

Eine weitere, vorteilhafte Variante bei der Bildung des Zahlenfolge-Wertes ist gegeben, wenn ein von der Adressinformation abgeleitetes Inkrement der Folgenummer verwendet wird, d.h., dass das Inkrement keine Konstante darstellt. Dennoch kann ein solchermaßen von der Adressinformation abgeleitetes Inkrement sowohl auf Seiten des Senders als auch auf Seiten des Empfängers separat gebildet werden, ohne dass das Inkrement in einem Datenpaket von dem Sender zu dem Sender zu dem Empfänger oder umgekehrt übermittelt werden muss.

In dem Fall, in dem der Zahlenbereich aller für die sicherheitsgerichtete Kommunikation verwendeten Kommunikationsadressen kleiner ist als der Zahlenbereich der Signatur, kann der Adresswert den "Differenz-Zahlenbereich" nutzen, d.h., dass beispielsweise in den Fällen, in denen für die Adressinformationen 32 Bit reserviert sind, der tatsächlich verwendete Adressraum jedoch nur 16 Bit beträgt, die restlichen 16 Bit für den Zahlenfolge-Wert genutzt werden können. Dann wird der Prüfwert über alle die für Adressinformationen reservierten Bits (hier: 32 Bit) errechnet, wodurch dann automatisch der Zahlenfolge-Wert bei der Generierung des Prüfwertes berücksichtigt ist. In einem solchen Fall können geringere Anforderungen an die Generierung des Zahlenfolge-Wertes gestellt werden, ohne dass die Fehlererkennung im zeitlichen Mittel schlechter wird; zudem braucht die zweite Rechenvorschrift gegenüber dem Stand der Technik nicht angepasst werden.

Vorteilhaft werden für die Errechnung des Zahlenfolge-Wertes die Adressinformationen des Empfängers verwendet; zusätzlich oder alternativ können in die Generierung des Prüfwertes bzw. des Erwartungswertes auch die Daten (F-Daten; Payload der sicherheitsgerichteten Kommunikation) und/oder die Adressinformationen des Senders einbezogen werden, was insbesondere dann, wenn in unterschiedlichen Datenpaketen auch unterschiedliche Daten bzw. Datenwerte übertragen werden bzw. unterschiedliche Adressinformationen des Senders auftreten, statistisch eine bessere Variierung des Prüfwertes bzw. des zu Kontrollzwecken generierten Erwartungswertes zur Folge hat.

Ausführungsbeispiele des erfindungsgemäßen Verfahrens werden nachfolgend anhand der Zeichnung erläutert. Diese dienen gleichzeitig der Erläuterung erfindungsgemäßer Systeme.

Dabei zeigen:
- Figur 1: die Generierung, den Transfer und die Auswertung eines Datenpaketes,
- Figur 2: die Übertragung des erfindungsgemäß aufgebauten Datenpaketes mittels eines Standard-Übertragungsverfahrens bzw. Standard-Kommunikations-layers,
- Figuren 3 - 5: verschiedene Varianten zur Generierung des Zahlenfolge-Werts, und
- Figur 6: die Generierung einer Folgenummer mit integrierten Adressinformationen.

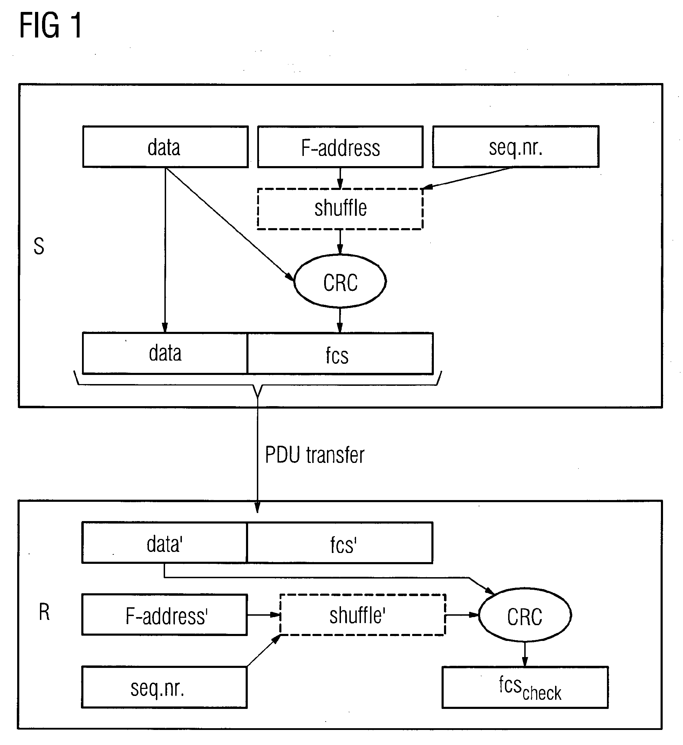

In der Figur 1 ist schematisch die Generierung, Übertragung und Auswertung eines Datenpaketes PDU (Process Data Unit) gezeigt. Das Datenpaket PDU besteht dabei aus einem Datenteil data und einem Prüfwert fcs (Frame Check Sequence), wobei angenommen wird, dass der Datenteil data und der Prüfwert fcs mittels eines aus dem Stand der Technik bekannten, sicherheitsgerichteten Übertragungsverfahrens von dem Sender S zu dem Empfänger R (Receiver) übertragen ("transfer") wird. Der Datenteil data und der Prüfwert fcs stellen also die Nutzinformation "Payload" eines aus dem Stand der Technik bekannten Datenpaketes, beispielsweise eines gemäß dem im Ethernet verwendeten TCP/IP-Protokolls aufgebauten "Frames", dar.

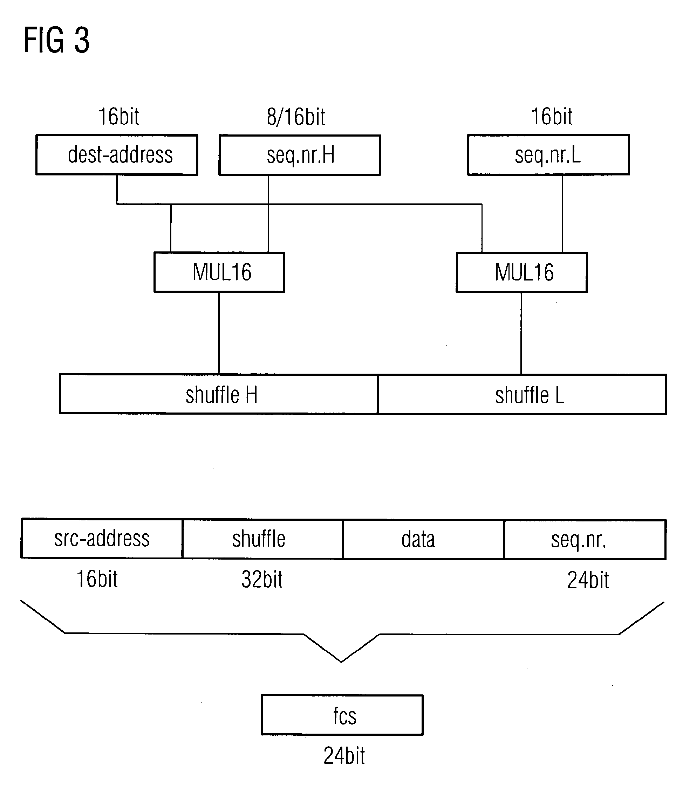

Auf Seiten des Senders S wird der Datenanteil data, der die eigentliche Nutzinformation des sicheren Übertragungskanals sein soll, unverändert in das sicherheitsgerichtete Datenpaket übernommen. Zusätzlich wird ein Prüfwert fcs generiert, der im vorliegenden Ausführungsbeispiel mittels des CRC-Verfahrens (CRC = Cyclic Redundancy Check) gebildet wird. Bei dem CRC-Verfahren, welches für sich gesehen dem Stand der Technik entspricht, wird hier allerdings aus dem Datenanteil data und einem Zahlenfolge-Wert shuffle der Prüfwert fcs erzeugt, wobei der Zahlenfolge-Wert shuffle mittels einer ersten Rechenvorschrift aus der Adressinformation F-adress und einem einer Folgenummer seq.nr. gebildet wird; die Bildung des Prüfwerts fcs aus dem Zahlenfolge-Wert shuffle und dem Datenanteil data, also die CRC-Berechnung, stellt dabei eine zweite Rechenvorschrift dar. Während die zweite Rechenvorschrift, also die CRC-Berechnung, wie bereits erwähnt, ein Standardverfahren darstellt, wird die erste Rechenvorschrift zur Bildung des Zahlenfolge-Wertes shuffle später anhand der Figuren 3 bis 5 näher erläutert werden.

Nach der Übertragung (transfer) des Datenpaktes PDU wird dieses seitens des Empfängers ausgewertet; der empfangene Datenanteil ist in der Figur seitens des Empfängers R mit dem Bezugszeichen data' und der empfangene Prüfwert mit dem Bezugszeichen fcs' gekennzeichnet, wodurch verdeutlicht werden soll, dass während der Übertragung (transfer) unbeabsichtigt ein Fehler aufgetreten sein kann, der den Datenanteil data und/oder den Prüfwert fcs beeinträchtigt haben könnte. Aus den seitens des Empfängers R bereits vorliegenden Informationen über die Kommunikationsadresse F-adress` und der Folgenummer seq.nr. wird auch seitens des Empfängers R ein Zahlenfolge-Wert shuffle' gebildet, welcher mittels desselben CRC-Verfahrens und unter Einbeziehung des empfangenen Datenanteils data' in den Erwartungswert fCS_{check} umgesetzt wird; dieser Erwartungswert fCS_{check} wird in der Folge mit dem empfangenen Prüfwert fCS` verglichen, wobei eine Abweichung zwischen beiden Werten auf einen Fehler hindeutet.

Hierbei ist gegenüber bekannten sicherheitsgerichteten Kommunikationsverfahren die Bildung des Zahlenfolge-Wertes shuffle und dessen Einbeziehung in die Generierung des Prüfwertes neu, daher ist in den Figuren der Zahlenfolge-Wert shuffle mit einer gestrichelten Linie umrandet.

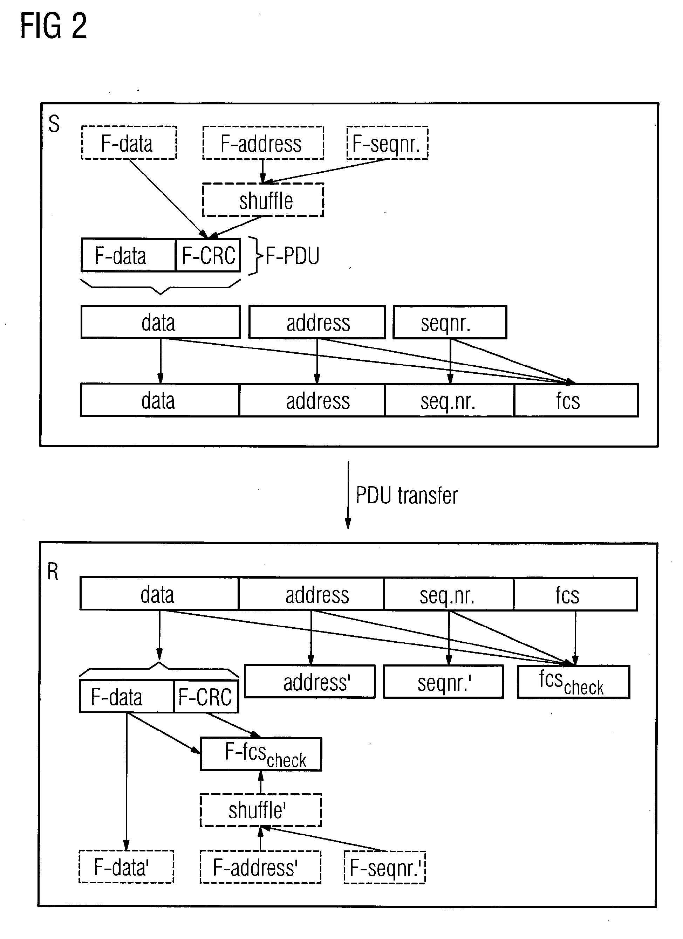

In der Figur 2 ist zur Erläuterung der Verwendung einer unterlagerten, dem Stand der Technik entsprechenden Kommunikationsverbindung eine detailliertere Darstellung gezeigt. Die aus der Figur 1 bekannten Datenfelder sind in der Figur 2 mit gestrichelten Linien dargestellt, wobei das in der Figur 1 erzeugte Datenpaket PDU in der Figur 2 als "sicherheitsgerichtetes" Datenpaket F-PDU dargestellt ist. Dieses sicherheitsgerichtete Datenpaket F-PDU stellt im neuen Datenpaket data die Nutzinformation (Payload) des bekannten Datenübertragungsverfahrens dar, wobei in der Figur 2 das sicherheitsgerichtete Datenpaket F-PDU im Gegensatz zum Datenpaket PDU der Figur 1 anstelle des Prüfwertes fcs zunächste eine Prüfsumme F-CRC enthält, die zumindest aus dem Zahlenfolge-Wert shuffle und den Daten data gebildet ist. Diese Prüfsumme F-CRC geht in die Signaturbildung der unterlagerten Kommunikation ein, wobei aus der "Payload" data, die aus der sicherheitsgerichteten Payload F-data und der Prüfsumme F-CRC besteht, und anderen Bestandteilen (address, seq.nr.) der unterlagerten Kommunikation der Prüfwert fcs generiert ist. Dabei wird deutlich, dass durch die Kombination des erfindungsgemäßen Verfahrens mit einer gebräuchlichen Kommunikationsinfrastruktur, die bereits eine Prüfwert-Generierung mit der zweiten Rechenvorschrift durchführt, die Generierung des Prüfwertes unverändert in unteren Protokollschichten verbleibt. Seitens des Empfängers muss jedoch der Erwartungswert F-fCS_{check} in höheren Protokollschichten ("F-Layer") erzeugt und mit dem empfangenen Prüfwert fcs oder einem daraus abgeleiteten Prüfwert fCS_{check} verglichen werden.

Im Folgenden wird anhand der Figuren 3 bis 6 jeweils eine Variante der ersten Rechenvorschrift zur Bildung des Zahlenfolge-Wertes shuffle erläutert.

Im Ausführungsbeispiel gemäß der Figur 3 wird die Ziel-Kommunikationsadresse dest-address mit den höherwertigen Bits der Folgenummer seq.nr. multipliziert, wobei das Multiplikationsergebnis die höherwertigen Bits des Zahlenfolge-Wertes shuffle bilden. Die niederwertigen Bits des Zahlenfolge-Wertes shuffle werden durch eine Multiplikation der Ziel-Kommunikationsadresse dest-address mit den niederwertigen Bits der Folgenummer seq.nr. gebildet. Der Zahlenfolge-Wert shuffle wird dann zusammen mit der Kommunikationsadresse srcaddress des Senders S, dem Datenanteil data und der Folgenummer seq.nr. zur Bildung des Prüfwertes fcs verwendet, wobei die dazu verwendete zweite Rechenvorschrift ein CRC-Verfahren sein kann.

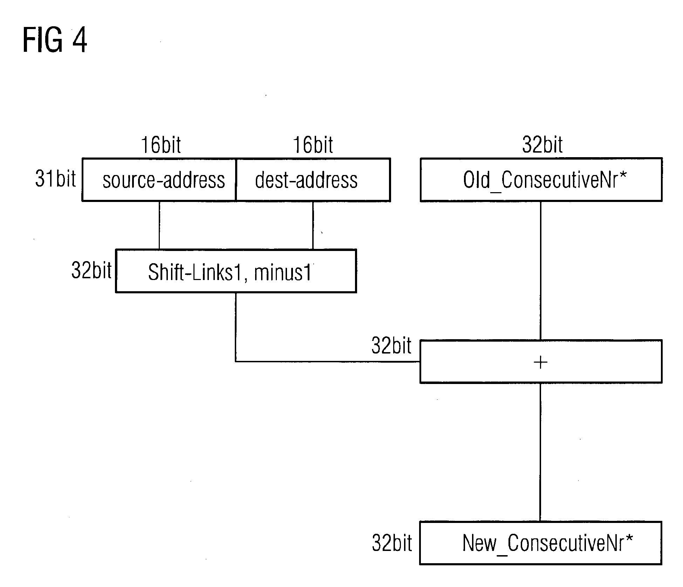

Während im Beispiel der Figur 3 eine fortlaufende Folgenummer seq.nr. verwendet wird, die beispielsweise mit jedem F-Datenpaket oder jeder Sequenz an F-Datenpaketen inkrementiert wird und insbesondere auch mit einer in der unterlagerten Kommunikation verwendeten Folgenummer identisch sein kann - siehe Bezugszeichen seqnr. und seq.nr. der Figur 2 - , ist in der Figur 4 gezeigt, wie man eine solche Folgenummer für jedes Datenpaket bzw. für jede Folge von Datenpaketen mittels eines adressabhängigen Inkrements einer vorhergehenden Folgenummer (in der Figur 4 mit 01d_ConsecutiveNr* gekennzeichnet) verändern kann, wobei die resultierende Folgenummer (hier mit dem Bezugszeichen New_ConsecutiveNr*) an die Stelle der Folgenummer seq.nr. der Figuren 1 bis 3 treten kann.

Im Rahmen der Figur 4 sei angenommen, dass für die Kommunikationsadresse, also die zugrunde liegenden Adressinformationen, ein Wertebereich von 1 bis 2¹⁵⁻¹ verwendet wird. Dies bedeutet, dass die Adressinformationen 31 Bit "breit" sein können, woraus in der Folge gemäß der Rechenvorschrift aus der Figur 4 ein 32-Bit-Wert durch eine Links-Schiebeoperaton erzeugt wird. Diese manipulierte Adressinformation wird zu der vorhergehenden Folgenummer 01d_ConsecutiveNr.* addiert, wobei der Überlauf verworfen wird und als Ergebnis die neue Folgenummer New_ConsecutiveNr* sich ergibt. Dadurch wird die Adressinformation mit einem "Wert für die Aktualität", nämlich die Folgenummer, verschmolzen, was zu einer besseren statistischen Variation des Zahlenfolge-Wertes shuffle und damit des Prüfwerts fcs führt.

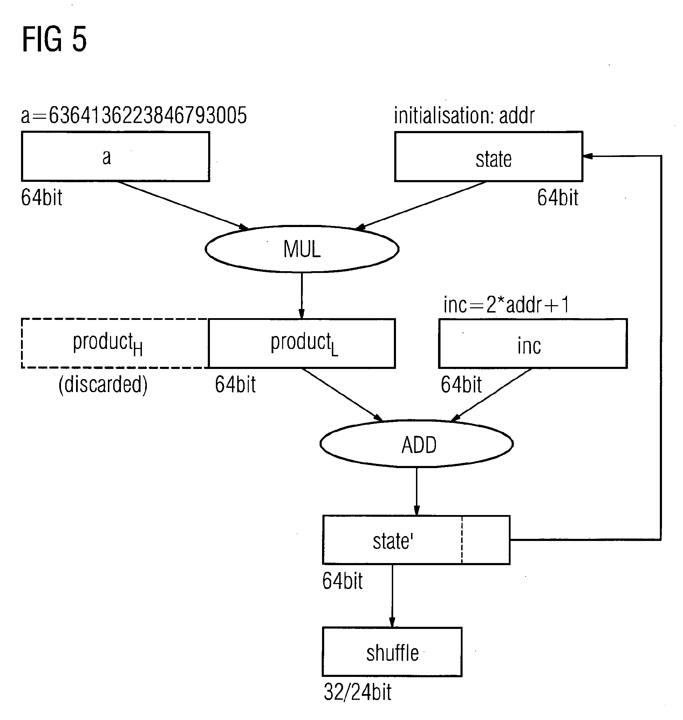

In der Figur 5 ist ein weiteres Beispiel zur Erzeugung des Zahlenfolge-Wertes shuffle gezeigt, wobei hier aus einer geeignet gewählten Konstante a und aus einem Startwert state sowie aus einem adressabhängigen Inkrement inc für jedes Datenpaket bzw. jede Folge von Datenpaketen ein neuer Zahlenfolge-Wert shuffle erzeugt wird. Das Inkrement beträgt dabei in diesem Beispiel die verdoppelte Kommunikationsinformation (Adressinformation addr) + 1. Der dabei erzeugte, veränderte Statuswert state' wird dabei zumindest teilweise dem nächten Berechnungszyklus zugrunde gelegt. Für das erste zu übertragende Datenpaket muss die Statusinformation state geeignet vorbelegt (initialisiert) werden, wobei beispielsweise die auch im weiteren Berechnungsverfahren verwendete Adressinformation addr verwendet werden kann.

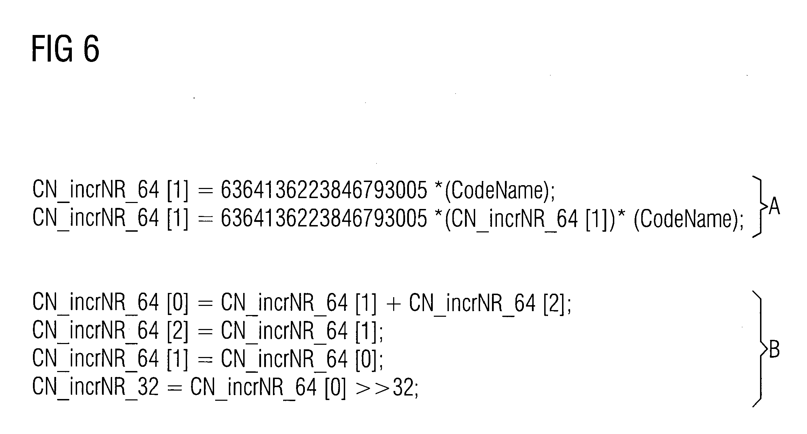

Schließlich zeigt die Figur 6 eine weitere Variante, wobei eine Folgenummer, hier mit dem Bezugszeichen "CN_incrNR_64 [0]" gekennzeichnet, mit integrierten Adressinformationen als Basis für den Zahlenfolge-Wert shuffle erzeugt wird; die Adressinformationen sind dabei in eine Variable "CodeName" abgebildet worden, beispielsweise direkt oder mittels eines Signatur- oder Hash-Verfahrens. In einem ersten Schritt A sind die Berechnungen zum Start (Initialisierung) der Kommunikation dargestellt; zu diesem Zeitpunkt gibt es noch keine vorhergehenden Folgenummern "CN_incrNR_64 [1]", "CN_incrNR_64 [2]", aus denen der zur Bildung des Zahlenfolge-Wertes shuffle benötigte Zahlenfolge-Wert "CN_incrNR_64 [0]" errechnet werden kann.

In die Bildung der beiden in Schritt B benötigten Startwerte für die Folgenummern "CN_incrNR_64 [1]", "CN_incrNR_64 [2]" gehen im Schritt A jeweils multiplikativ die in der Variablen "CodeName" abgebildeten Adressinformationen und die aus der Figur 5 bekannte Konstante a ein. Schritt B zeigt die Berechnung der benötigten Folgenummer "CN_incrNR_64 [0]" unter Verwendung der im Schritt A erzeugten Pseudo-Vorgängerwerte der Folgenummern. Dieser wird hier einfach durch Summierung der beiden Vorgängerwerte erzeugt; ein etwaiger Überlauf wird verworfen. Anschließend wird der direkte Vorgängerwert umgespeichert und die neu erzeugte Folgenummer "CN_incrNR_64 [0]" für den nächsten Zyklus bzw. die nächste Sequenz gesichert.

Anstelle der oder zusätzlich zu den Adressinformationen können in der Variable CodeName auch Kommunikationsparameter oder dgl. codiert sein. Weiterhin sind in jeder neu erzeugten Folgenummer "CN_incrNR_64 [0]" implizit sowohl die Adressinformationen als auch ein Inkrement, welches sich mit jedem Datenpaket bzw. Zyklus / Sequenz ändert, enthalten. Daher kann die Folgenummer "CN_incrNR 64 [0]" auch direkt als Zahlenfolge-Wert shuffle verwendet werden.

## Patentansprüche

1. Verfahren zur Erkennung von Fehlern bei der Übertragung von Daten (data) von einem Sender (S) zu zumindest einem Empfänger (R),
wobei die Daten (data) zusammen mit den Empfänger (R) identifizierenden Adressinformationen (F-address) in einer Folge von Datenpaketen (PDU) codiert sind und mittels der Datenpakete (PDU) übertragen werden,
wobei für jedes Datenpaket (PDU) vom Sender zumindest ein Prüfwert (fcs) generiert und mit dem oder in dem Datenpaket (PDU) zu dem Empfänger übermittelt und von diesem mit einem Erwartungswert (fCS_{check}) verglichen wird, wobei im Fall einer Abweichung ein Fehler erkannt wird,
**dadurch gekennzeichnet,**
**dass** für jedes zu übertragende Datenpaket (PDU) in einem ersten Schritt durch den Sender (S) zumindest aus den Adressinformationen (F-address) ein Zahlenfolge-Wert (shuffle) mittels einer ersten Rechenvorschrift errechnet und aus diesem Zahlenfolge-Wert mittels einer zweiten Rechenvorschrift (CRC) der Prüfwert (fcs) generiert wird, wobei die erste Rechenvorschrift derart ausgebildet ist, dass sich für jedes Datenpaket oder jede Folge von Datenpaketen ein veränderter Zahlenfolge-Wert (shuffle) ergibt,
in einem zweiten Schritt das Datenpaket (PDU) mit dem Prüfwert (fcs) zu dem Empfänger (R) übertragen wird,
in einem dritten Schritt durch den Empfänger (R) zumindest aus 13 einem Adresswert (F-address') mittels der ersten Rechenvorschrift ein der Zahlenfolqe-Wert (shuffle') errechnet und aus dem Zahlenfolge-Wert (shuffle') mittels der zweiten Rechenvorschrift (CRC) der Erwartungswert (fCS_{check}) generiert und mit dem empfangenen Prüfwert (fcs') verglichen wird.

2. Verfahren nach Patentanspruch 1,
**dadurch gekennzeichnet,**
**dass** sowohl im Sender als auch im Empfänger die Zahlenfolge-Werte (shuffle, shuffle') mittels separat vorliegenden Adressinformationen (F-address, F-address') gebildet werden.

3. Verfahren nach Patentanspruch 1 oder 2,
**dadurch gekennzeichnet,**
**dass** die Zahlenfolge-Werte (shuffle, shuffle') jeweils aus vorhergehenden Zahlenfolge-Werten mittels einer Änderungsvorschrift neu gebildet werden.

4. Verfahren nach einem der vorhergehenden Patentansprüche,
**dadurch gekennzeichnet,**
**dass** für die jeweilige Bildung des neuen Zahlenfolge-Wertes (shuffle, shuffle')eine Folgenummer (seq.nr.) des betreffenden Datenpaketes (PDU) bzw. eine Folgenummer der betreffenden Sequenz von Datenpaketen (PDU) verwendet wird.

5. Verfahren nach Patentanspruch 4,
**dadurch gekennzeichnet,**
**dass** für die Bildung des Zahlenfolge-Wertes (shuffle) ein von der Adressinformation (F-address, F-address') abgeleitetes Inkrement der Folgenummer (seq.nr.) verwendet wird.

6. Verfahren nach einem der Patentansprüche 3 bis 5,
**dadurch gekennzeichnet,**
**dass** für die Bildung des Zahlenfolge-Wertes (shuffle, shuffle') die Summe vorangegangener Zahlenfolge-Werte verwendet wird.

7. Verfahren nach Patentanspruch 6,
**dadurch gekennzeichnet,**
**dass** nach einer Initialisierung die beiden vorangegangenen Zahlenfolge-Werte aus der Adressinformation (F-address, F-address') errechnet werden.

8. Verfahren nach einem der vorhergehenden Patentansprüche,
**dadurch gekennzeichnet,**
**dass** im ersten und im dritten Schritt in den Fällen, in denen der Wertebereich der in einer Kommunikationsanordnung verwendeten Adressinformationen (F-address, F-address') kleiner ist als der für die Adressinformationen (F-address, F-address') reservierte Wertebereich, der Zahlenfolge-Wert (Shuffle, shuffle') vor der Generierung des Prüfwertes (fcs) bzw. des Erwartungswertes (fCS_{check}) in den nicht benötigten Wertebereich der Adressinformationen (F-address, F-address') eingefügt wird.

9. Verfahren nach einem der vorhergehenden Patentansprüche,
**dadurch gekennzeichnet,**
**dass** in die Generierung des Prüfwertes (fcs) bzw. des Erwartungswertes (fcs_{check}) auch die Daten (data) und/oder eine Adressinformation des Senders einbezogen werden.

10. System zur Erkennung von Fehlern bei der Übertragung von Daten (data) von einem Sender (S) zu zumindest einem Empfänger (R),
wobei die Daten (data) in einer Folge von Datenpaketen (PDU) von dem Sender (S) zu dem Empfänger (R) übertragen werden, wobei die Datenpakete (PDU) den Empfänger (R) identifizierende Adressinformationen (F-address) und eine vom Sender (S) generierten und vom Empfänger (R) auszuwertenden Prüfwert (fcs) umfassen,
wobei der Empfänger (R) zum Vergleich des mit dem jeweiligen Datenpaket (PDU) empfangenen Prüfwertes (fCS') mit einem selbst generierten Erwartungswert (fCS_{check}) eingerichtet ist, wobei der Vergleich zur Erkennung von Fehlern bei der Übertragung eingerichtet ist,
**dadurch gekennzeichnet,**
**dass** für jedes zu übertragende Datenpaket (PDU) der Sender (S) dazu eingerichtet ist, in einem ersten Schritt zumindest aus den Adressinformationen (F-address) einen Zahlenfolge-Wert (shuffle) mittels einer ersten Rechenvorschrift zu errechnen und aus diesem Zahlenfolge-Wert (shuffle) mittels einer zweiten Rechenvorschrift (CRC) den Prüfwert (FCS) zu generieren, wobei die erste Rechenvorschrift derart ausgebildet ist, dass sich für jedes Datenpaket oder jede Folge von Datenpaketen ein veränderter Zahlenfolge-Wert (shuffle) ergibt,
das System zur Übertragung des Datenpaketes (PDU) mit dem Prüfwert (fcs) zu dem Empfänger (R) in einem zweiten Schritt ausgebildet ist, und
der Empfänger (R) dazu eingerichtet ist, in einem dritten Schritt zumindest aus Adressinformationen (F-address') einen den Zahlenfolge-Wert (shuffle') mittels der ersten Rechenvorschrift zu errechnen und aus diesem Zahlenfolge-Wert (shuffle') mittels der zweiten Rechenvorschrift (CRC) den Erwartungswert (fCS_{check}) zu generieren und mit dem im zweiten Schritt empfangenen Prüfwert (fCS') zu vergleichen.

## Claims

1. Method for detecting errors in the transfer of data (data) from a transmitter (S) to at least one receiver (R),
wherein the data (data) are coded together with address information (F-address) identifying the receiver (R) in a series of data packets (PDU) and are transferred by means of the data packets (PDU),
wherein at least one check value (fcs) is generated by the transmitter for each data packet (PDU) and is transferred with or in the data packet (PDU) to the receiver and is compared by the latter with an expectation value (fcs_{check}), wherein an error is detected in the event of a deviation,
**characterized in that**,
for each data packet (PDU) to be transmitted,
in a first step, a number sequence value (shuffle) is calculated by the transmitter (S) at least from the address information (F-address) by means of a first calculation rule and the check value (fcs) is generated from this number sequence value by means of a second calculation rule (CRC), wherein the first calculations rule is designed in such a way that a modified number sequence value (shuffle) is obtained for each data packet or each series of data packets,
in a second step, the data packet (PDU) is transferred with the check value (fcs) to the receiver (R),
a number sequence value (shuffle') is calculated in a third step by the receiver (R) at least from an address value (F-address') by means of the first calculation rule and the expected value (fCS_{check}) is generated from the number sequence value (shuffle') by means of the second calculation rule (CRC) and is compared with the received check value (fcs').

2. Method according to Patent Claim 1,
**characterized in that**
the number sequence values (shuffle, shuffle') are formed in both the transmitter and the receiver by means of separately occurring address information (F-address, F-address').

3. Method according to Patent Claim 1 or 2,
**characterized in that**
the number sequence values (shuffle, shuffle') are reformed in each case from preceding number sequence values by means of a change rule.

4. Method according to one of the proceeding patent claims,
**characterized in that**
a sequence number (seq.nr.) of the relevant data packet (PDU) or a sequence number of the relevant sequence of data packets (PDU) is used for the respective formation of the new number sequence value (shuffle, shuffle').

5. Method according to Patent Claim 4,
**characterized in that**
an increment of the sequence number (seq.nr.) derived from the address information (F-address, F-address') is used for the formation of the number sequence value (shuffle).

6. Method according to one of Patent Claims 3 to 5,
**characterized in that**
the sum of preceding number sequence values is used for the formation of the number sequence value (shuffle, shuffle').

7. Method according to Patent Claim 6,
**characterized in that**,
following an initialization, the two preceding number sequence values are calculated from the address information (F-address, F-address').

8. Method according to one of the preceding patent claims,
**characterized in that**,
In the first and in the third step, in cases where the value range of the address information (F-address, F-address') used in a communication arrangement is smaller than the value range reserved for the address information (F-address, F-address'), the number sequence value (shuffle, shuffle') is inserted into the value range of the address information (F-address, F-address') which is not required before the generation of the check value (fcs) or the expected value (fcs_{check}).

9. Method according to one of the preceding patent claims,
**characterized in that**
the data (data) and/or address information of the transmitter are also included in the generation of the check value (fcs) or the expected value (fcs_{check}).

10. System for detecting errors in the transmission of data (data) from a transmitter (S) to at least one receiver (R), wherein the data (data) are transferred in a series of data packets (PDU) from the transmitter (S) to the receiver (R), wherein the data packets (PDU) comprise address information (F-address) identifying the receiver (R) and a check value (fcs) generated by the transmitter (S) and to be evaluated by the receiver (R),
wherein the receiver (R) is configured to compare the check value (fcs') received along with the respective data packet (PDU) with a self-generated expectation value (fcs_{check}), wherein the comparison is configured to detect errors in the transfer,
**characterized in that**,
for each data packet (PDU) to be transmitted,
the transmitter (S) is configured to calculate a number sequence value (shuffle) in a first step at least from the address information (F-address) by means of a first calculation rule and to generate a check value (FCS) from this number sequence value (shuffle) by means of a second calculation rule (CRC), wherein the first calculation rule is designed in such a way that a modified number sequence value (shuffle) is obtained for each data packet or each series of data packets,
the system is designed to transfer the data packet (PDU) with the check value (fcs) to the receiver (R) in a second step, and the receiver (R) is configured to generate a number sequence value (shuffle') in a third step at least from address information (F-address') by means of the first calculation rule and to generate the expected value (fcs_{check}) from this number sequence value (shuffle') by means of the second calculation rule (CRC) and to compare it with the check value (fcs') received in the second step.

## Revendications

1. Procédé de détection d'erreurs lors de la transmission de données (data) d'un émetteur (S) à au moins un récepteur (R),
dans lequel les données (data) sont ensemble avec des informations (F-adresse) d'adresse identifiant le récepteur (R) codées en une chaîne de paquets (PDU) de données et sont transmises au moyen des paquets (PDU) de données,
dans lequel on crée, pour chaque paquet (PDU) de données par l'émetteur, au moins une valeur (fcs) de contrôle et on la transmet au récepteur avec ou dans le paquet (PDU) de données et elle est comparée par celui-ci à une valeur (fcs_{check}) escomptée, une erreur étant détectée s'il y a un écart,
**caractérisé en ce que**
pour chaque paquet (PDU) de données à transmettre, on calcule au moyen d'une première prescription de calcul dans un premier stade, par l'émetteur (S) au moins à partir des informations (F-adresse) d'adresse, une valeur de suite de nombres (schuffle) et à partir de cette valeur de suite de nombres, on crée la valeur (fcs) de contrôle au moyen d'une deuxième opération (CRC) de calcul, la première opération de calcul étant telle qu'on obtient, pour chaque paquet (PDU) de données ou chaque chaîne de paquets de données, une valeur de suite de nombres (schuffle) modifiée,
dans un deuxième stade, on transmet au récepteur (R) le paquet (PDU) de données avec la valeur (fcs) de contrôle, dans un troisième stade, il est calculé par le récepteur (R) au moins à partir d'une valeur d'adresse (F-adresse') au moyen de la première opération de calcul, une valeur de suite de nombres (schuffle') et à partir de la valeur de suite de nombres (schuffle') il est créé, au moyen de la deuxième opération (CRC) de calcul, la valeur (fcs_{check}) escomptée qui est comparée à la valeur (fcs') de contrôle reçue.

2. Procédé suivant la revendication 1,
**caractérisé en ce que**
on forme à la fois dans l'émetteur et dans le récepteur les valeurs de suite de nombres (schuffle, schuffle') au moyen d'informations (F-adresse, F-adresse') d'adresse présentes séparément.

3. Procédé suivant la revendication 1 ou 2,
**caractérisé en ce que**
l'on forme à nouveau, au moyen d'une prescription de modification, les valeurs (schuffle) de suite de nombres (schuffle, schuffle') respectivement à partir des valeurs de suite de nombres précédentes.

4. Procédé suivant l'une des revendications précédentes,
**caractérisé en ce que**
l'on utilise, pour la formation respective de la nouvelle valeur de suite de nombres (schuffle, schuffle'), un numéro (seq.nr.) de chaîne du paquet (PDU) de données concernées ou un numéro de chaîne de la séquence concernée de paquets (PDU) de données.

5. Procédé suivant la revendication 4,
**caractérisé en ce que**
on utilise pour la formation de la valeur de suite de nombres (schuffle) un incrément, déduit de l'information (F-adresse, F-adresse') d'adresse, du numéro (seq.nr.) de chaîne.

6. Procédé suivant l'une des revendications 3 à 5,
**caractérisé en ce que**
on utilise pour la formation de la valeur de suite de nombres (schuffle, schuffle') la somme des valeurs de suite de nombres précédentes.

7. Procédé suivant la revendication 6,
**caractérisé en ce que**
après une initialisation, on calcule les deux valeurs de suite de nombres précédentes à partir de l'information (F-adresse, F-adresse') d'adresse.

8. Procédé suivant l'une des revendications précédentes,
**caractérisé en ce que**
dans le premier et dans le troisième stade, dans les cas où la plage de valeurs des informations (F-adresse, F-adresse') d'adresse utilisées dans un agencement de communication est plus petite que la plage de valeurs réservée aux informations ( F-adresse, F-adresse') d'adresse, on introduit la valeur de suite de nombres (schuffle, schuffle') avant la création de la valeur (fcs) de contrôle ou de la valeur (fcs_{check}) escomptée dans la plage de valeurs, qui n'est pas nécessaire, des informations (F-adresse, F-adresse') d'adresse.

9. Procédé suivant l'une des revendications précédentes,
**caractérisé en ce que**
dans la création de la valeur (fcs) de contrôle ou de la valeur (fcs_{check}) escomptée, on englobe aussi les données (data) et/ou une information d'adresse de l'émetteur.

10. Système de détection d'erreurs lors de la transmission de données (data) d'un émetteur (S) à au moins un récepteur (R),
dans lequel les données (data) sont transmises dans une chaîne de paquets (PDU) de données de l'émetteur (S) au récepteur (R),
dans lequel les paquets (PDU) de données comprennent des informations (F-adresse) d'adresse identifiant le récepteur (R), et une valeur (fcs) de contrôle créée par l'émetteur (S) et à exploiter par le récepteur (R),
dans lequel, le récepteur (R) est conçu pour comparer la valeur (fcs') reçue avec le paquet (PDU) de données respectif, à une valeur (fcs_{check}) escomptée autocréée, la comparaison étant conçue pour détecter des erreurs lors de la transmission,
**caractérisé en ce que**
pour chaque paquet (PDU) de données à transmettre, l'émetteur (S) est conçu pour, dans un premier stade, calculer au moins à partir des informations (F-adresse) d'adresse une valeur de suite de nombres (schuffle) au moyen d'une première opération de calcul et pour, à partir de cette valeur de suite de nombres (schuffle) au moyen d'une deuxième opération (CRC) de calcul, créer la valeur (fsc) de contrôle, la première opération de calcul étant telle qu'il y a, pour chaque paquet de données ou chaque chaîne de paquets de données, une valeur de suite de nombres (schuffle) modifiée,
le système est constitué pour la transmission du paquet (PDU) de données avec la valeur (fcs) de contrôle au récepteur (R) dans un deuxième stade, et
le récepteur (R) est conçu pour calculer, au moyen de la première installation de calcul, dans un troisième stade, au moins à partir des informations (F-adresse') d'adresse une valeur de suite de nombres (schuffle') et pour créer, à partir de cette valeur de suite de nombres (schuffle') au moyen de la deuxième opération (CRC) de calcul, la valeur (fcs_{check}) escomptée et pour la comparer à la valeur (fcs') de contrôle reçue dans le deuxième stade.
